# EUROPÄISCHE PATENTSCHRIFT

(11) **EP 1 875 800 B1**
(45) Veröffentlichungstag und Bekanntmachung des Hinweises auf die Patenterteilung: **07.09.2011**
(21) Anmeldenummer: 06014148.8
(22) Anmeldetag: 07.07.2006
(51) Int. Cl.: A01K 39/01

(54) **Nagerstick für Tiere**
Rodent stick
Baton pour rongeur

(43) Veröffentlichungstag der Anmeldung: 09.01.2008
(73) Patentinhaber: MULTIFIT Tiernahrungs GmbH, 47809 Krefeld (DE)
(72) Erfinder: Wiegler, Arnd, 40668 Meerbusch (DE)
(74) Vertreter: Rohmann, Michael

(56) Entgegenhaltungen:
- DE-A1- 3 636 572
- FR-A- 2 856 243
- US-A- 2 658 476
- US-A- 4 437 432

## Beschreibung

Die Erfindung betrifft einen Nagerstick für Tiere, insbesondere für Nagetiere, wobei ein Basiskörper aus einer Matrix und aus einer Vielzahl von in die Matrix eingebetteten Nahrungsteilchen vorgesehen ist. - Nagerstick meint im Rahmen der Erfindung insbesondere ein längliches stabförmiges Tiernahrungsprodukt.

Nagersticks der vorstehend genannten Art sind aus der Praxis in verschiedenen Ausführungsformen bekannt. Als Nahrungsteilchen sind häufig Getreidekörner in eine Matrix aus einem essbaren Matrixmaterial eingebettet. Der aus Matrix und Getreidekörnern gebildete Basiskörper umgibt in der Regel einen Trägerstab aus Holz oder Kunststoff, der oben aus dem Basiskörper herausragt. Der herausragende Abschnitt dieses Trägerstabes kann erfasst werden und dient der besseren Handhabung des Nagersticks. Die aus der Praxis bekannten Nagersticks lassen im Hinblick auf die Variationsmöglichkeiten von Geschmacksrichtungen bzw. im Hinblick auf eine Geschmacksvielfalt zu wünschen übrig. Außerdem lösen sich die Nahrungsteilchen bzw. Getreidekörner beim Transport und bei der Handhabung der Nagersticks leicht aus der Matrix. So kommt es beim Öffnen der Verpackungen dieser Nagersticks häufig zu unerwünschten Verschmutzungen. Fernerhin sind bei den bekannten Nagersticks bezüglich der Variation des äußeren Erscheinungsbildes kaum Alternativen gegeben.

Das Dokument DE-A-3636572 betrifft einen Nagerstick, bei dem eine Futtermasse an einem Haltestab angeordnet ist, wobei der Haltestab aus der Futtermasse herausragt. Gemäß des in DE-A-3636572 dargestellten Standes der Technik kann die Futtermasse aus Getreidekömem, die mit einem Honigleim gebunden sind, bestehen. Weiterhin sind in DE-A-3636572 unterschiedliche Ausbildungen des Haltestabes offenbart, mit denen eine einfache Fixierung des Haltestabes an einem Käfig erfolgen kann.

Das Dokument FR-A-2856243 betrifft Naschwerk für Tiere. Dieses Naschwerk ist so ausgestaltet, dass es von dem Maul eines Tieres vollständig aufgenommen werden kann. Die Herstellung des Naschwerks erfolgt, indem ein Pressling aus Grünpflanzen oder Getreide mit einer Zuckerschicht umgeben wird, auf die gegebenenfalls eine gummiartige Masse und eine weitere Zuckerschicht aufgebracht wird. Die Beschichtung des Presslings mit der Zuckerschicht erfolgt durch Benetzung mit warmem Sirup, da auf diese Weise die Viskosität des Sirups reduziert werden kann, wodurch ein gleichmäßiges Auftragen des Sirups auf den Pressling gewährleistet ist. Auf diese Weise wird eine gleichmäßige Zuckerschicht ausgebildet.

Der Erfindung liegt das technische Problem zugrunde, einen Nagerstick der eingangs genannten Art anzugeben, der die vorstehend beschriebenen Nachteile nicht aufweist.

Zur Lösung dieses technischen Problems shlägt die Erfindung einen Nagerstick für Tiere, mit den Merkmalen des Anspruchs 1 vor.

Wie oben bereits dargelegt meint Nagerstick im Rahmen der Erfindung insbesondere ein längliches stabförmiges Tiernahrungsprodukt. Der Nagerstick dient als Nage- bzw. Knabberprodukt für Tiere, insbesondere Nagetiere. Nagetiere meint im Rahmen der Erfindung insbesondere Kaninchen, Meerschweinchen, Hamster und Mäuse. Die Länge des Basiskörpers (Matrix mit Nahrungsteilchen) des erfindungsgemäßen Nagersticks beträgt zweckmäßigerweise 10 bis 25 cm und bevorzugt 12 bis 18 cm. Der quer zur Längsachse des Nagersticks gemessene Durchmesser des Basiskörpers beträgt vorzugsweise 1 bis 4 cm, bevorzugt 1,5 bis 3,5 cm und sehr bevorzugt 2 bis 3 cm. Der Basiskörper ist in der Regel im Wesentlichen zylinderförmig ausgebildet. Es versteht sich aber, dass der Basiskörper aufgrund der in die Matrix eingebetteten Nahrungsteilchen eine ungleichmäßige bzw. unebene Oberfläche haben kann.

Die Matrix besteht zweckmäßigerweise aus einem für Tiere essbaren bzw. genießbaren Klebermaterial. Dieses Klebermaterial bzw. Haftmaterial hält die Nahrungsteilchen zusammen. Es liegt im Rahmen der Erfindung, dass das Matrixmaterial plastisch verformbar ist. Gemäß einer Ausführungsform der Erfindung enthält das Matrixmaterial Honig.

Es liegt weiterhin im Rahmen der Erfindung, dass die in die Matrix eingebetteten Nahrungsteilchen Cerealien bzw. Cerealienteilchen sind. Dabei handelt es sich insbesondere um Getreidekörner und/oder Samenkörner und/oder Getreideflocken und/oder Nüsse und/oder getrocknetes Obst bzw. getrocknete Obststücke. Gemäß sehr bevorzugter Ausführungsform der Erfindung wird der Basiskörper des erfindungsgemäßen Nagersticks durch Tauchen eines Trägerstabes in eine flüssige bzw. zähflüssige Mischung aus dem Matrixmaterial und den Nahrungsteilchen und durch anschließendes Trocknen hergestellt. Der Trägerstab besteht zweckmäßigerweise aus Kunststoff oder Holz. Im fertiggestellten Zustand des Nagersticks umgibt der Basiskörper den Trägerstab und erstreckt sich dabei zweckmäßigerweise über den Großteil der Länge des Trägerstabes. Vorzugsweise ragt ein Abschnitt des Trägerstabes aus dem Basiskörper heraus und bildet gleichsam den Handhabungsabschnitt des Nagersticks. Mit anderen Worten kann der Nagerstick an diesem herausragenden Abschnitt erfasst werden und auf diese Weise einfacher gehandhabt werden. - In der genannten flüssigen bzw. zähflüssigen Mischung bildet die Matrix die flüssige bzw. zähflüssige Komponente, in der die festen Nahrungsteilchen verteilt sind. Beim Trocknen wird das Matrixmaterial fest bzw. erstarrt das Matrixmaterial und bildet zweckmäßigerweise eine plastisch oder elastisch verformbare Masse. Nach besonders bevorzugter Ausführungsform der Erfindung wird das genannte Eintauchen und das anschließende Trocknen mehrfach wiederholt. Vorzugsweise wird zumindest dreimal hintereinander eingetaucht und anschließend getrocknet. - Grundsätzlich sind aber auch andere Herstellungsverfahren für den Basiskörper denkbar.

Es liegt im Rahmen der Erfindung, dass die erfindungsgemäße Ummantelung des Basiskörpers durch Eintauchen des Basiskörpers in eine flüssige bzw. zähflüssige Ummantelungssubstanz erzeugt wird. Die Ummantelungssubstanz enthält zumindest einen Geschmacksstoff und/oder zumindest einen Aromastoff und/oder zumindest einen Farbstoff. Es liegt fernerhin im Rahmen der Erfindung, dass der in die Ummantelungssubstanz eingetauchte Basiskörper anschließend getrocknet wird, so dass die Ummantelungssubstanz fest wird bzw. erstarrt. Zweckmäßigerweise findet eine formschlüssige Ummantelung des Basiskörpers statt. Vorzugsweise findet an den Stellen, an denen der Basiskörper mit der Ummantelungssubstanz überzogen wird eine lückenlose Ummantelung des Basiskörpers statt. Zweckmäßigerweise erstreckt sich die Ummantelung über zumindest ein Viertel, bevorzugt über zumindest ein Drittel und besonders bevorzugt über zumindest die Hälfte der Länge des Basiskörpers. Grundsätzlich kann der Basiskörper auch vollständig von der Ummantelungssubstanz überzogen sein. Nach einer bevorzugten Ausführungsform der Erfindung hat die Ummantelungssubstanz eine charakteristische Farbe, so dass mit Hilfe der Ummantelungssubstanz auch das äußere Erscheinungsbild des erfindungsgemäßen Nagersticks variiert werden kann.

Nach einer besonders bevorzugten Ausführungsform der Erfindung ist die flüssige bzw. die zähflüssige Ummantelungssubstanz ein Milchprodukt und/oder ein Sirup. Als Milchprodukt wird vorzugsweise Joghurtmasse, beispielsweise ein Fruchtjoghurt eingesetzt. Wenn es sich bei der Ummantelungssubstanz um einen Sirup handelt, wird nach einer bevorzugten Ausführungsform Fruchtsirup verwendet. Es liegt im Rahmen der Erfindung, dass der Basiskörper mit einer süßen Ummantelungssubstanz ummantelt wird. Die Ummantelungssubstanz enthält dann zweckmäßigerweise einen süßen bzw. zuckerhaltigen Geschmacksstoff. In der Ummantelungssubstanz können natürliche und/oder künstliche Geschmacksstoffe eingesetzt werden.

Nach dem Aufbringen der Ummantelungssubstanz auf den Basiskörper wird der Basiskörper zweckmäßigerweise getrocknet. Das Ergebnis ist eine feste Ummantelung des Basiskörpers mit der Ummantelungssubstanz. Die Schichtdicke der Ummantelung bzw. der Ummantelungssubstanz beträgt zweckmäßigerweise 0,1 bis 2 mm, vorzugsweise 0,2 bis 1,8 mm.

Eine besonders bevorzugte Ausführungsform der Erfindung ist dadurch gekennzeichnet, dass auf den ummantelten Basiskörper eine zusätzliche Schutzschicht aufgebracht wird. Diese Schutzschicht ist vorzugsweise transparent ausgebildet und zweckmäßigerweise handelt es sich um eine glänzende Schutzschicht. Die Schutzschicht verleiht dem erfindungsgemäßen Nagerstick ein vorteilhaftes äußeres Erscheinungsbild und trägt zusätzlich zur Festigkeit des Nagersticks bzw. des Basiskörpers bei. Die Schutzschicht besteht nach empfohlener Ausführungsform aus Glukose bzw. aus zumindest einer Glukoseart. Es liegt im Rahmen der Erfindung, dass die Schutzschicht durch Eintauchen des ummantelten Basiskörpers in eine flüssige bzw. zähflüssige Schutzschichtmasse aufgebracht wird. Nach einer anderen Ausführungsform der Erfindung kann die Schutzschicht auch auf den ummantelten Basiskörper aufgesprüht werden.

Nach sehr bevorzugter Ausführungsform der Erfindung wird der ummantelte Basiskörper gebacken. Vorzugsweise erfolgt das Backen des Basiskörpers bzw. des Nagersticks nach dem Aufbringen der vorstehend erläuterten Schutzschicht auf den ummantelten Basiskörper. Das Backen des Basiskörpers bzw. des Nagersticks erfolgt zweckmäßigerweise bei 80 °C bis 120 °C, vorzugsweise bei 100 °C bzw. bei etwa 110 °C. Der Basiskörper bzw. der Nagerstick wird dabei nur eine relativ kurze Zeit gebacken, beispielsweise nur wenige Minuten. Durch den Abschlussbackprozess erhält der erfindungsgemäße Nagerstick eine vorteilhafte Festigkeit und Struktur.

Der Erfindung liegt die Erkenntnis zugrunde, dass bei einem erfindungsgemäßen Nagerstick auf einfache und problemlose Weise viele verschiedene Geschmacksrichtungen verwirklicht werden können, indem die Ummantelung des Basiskörpers entsprechend variiert wird. Außerdem kann dem Nagerstick durch die erfindungsgemäße Ummantelung ein vorteilhaftes äußeres ästhetisches Erscheinungsbild verliehen werden, beispielsweise indem die Ummantelung eine charakteristische Farbe aufweist. Die erfindungsgemäße Behandlung des Nagersticks verleiht dem Stick auch eine vorteilhafte Festigkeit. Aufgrund der erfindungsgemäßen Ummantelung können sich Nahrungsteilchen bzw. Getreidekörner nicht mehr aus der Matrix lösen und nachteilhafte Verschmutzungen verursachen. Von besonderer Bedeutung ist im Rahmen der Erfindung, dass durch die erfindungsgemäße Ummantelung auch die Haltbarkeit eines Nagersticks überraschenderweise vorteilhaft verlängert wird. Hervorzuheben ist auch, dass der erfindungsgemäße Nagerstick auf relativ einfache und kostengünstige Weise herstellbar ist.

Nachfolgend wird die Erfindung anhand einer lediglich ein Ausführungsbeispiel darstellenden Zeichnung näher erläutert. Es zeigen in schematischer Darstellung:

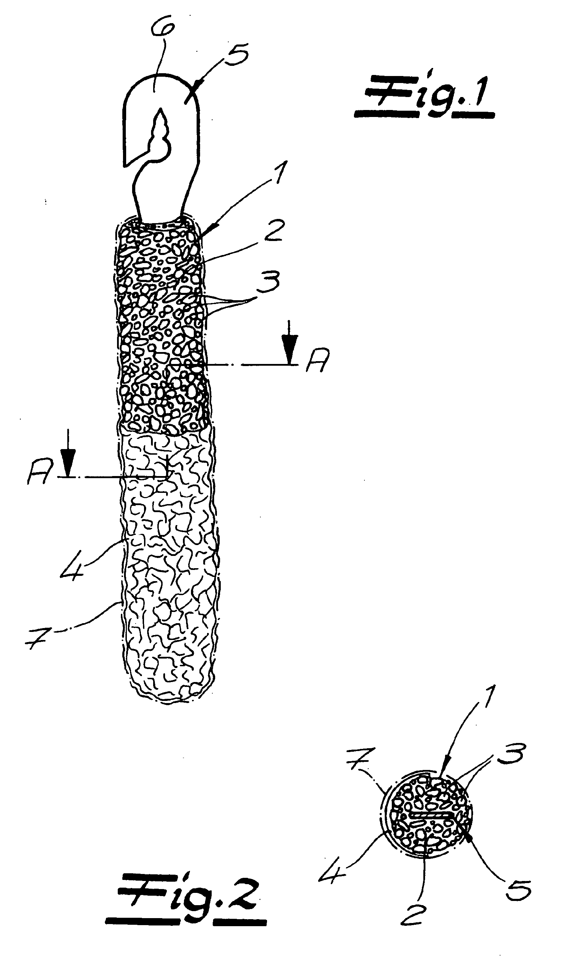

- Fig. 1: eine Ansicht eines erfindungsgemäßen Nagersticks und
- Fig. 2: einen Schnitt A-A durch den Gegenstand nach Fig. 1.

Die Figuren zeigen einen erfindungsgemäßen Nagerstick für Tiere, insbesondere für Nagetiere. Der Nagerstick weist einen Basiskörper 1 aus einer Matrix 2 und aus einer Vielzahl von in die Matrix 2 eingebetteten Nahrungsteilchen auf, wobei es sich bei den Nahrungsteilchen im Ausführungsbeispiel um Getreidekörner 3 handelt. Die Matrix 2 besteht aus einem für die Tiere essbaren bzw. genießbaren Matrixmaterial, das die Getreidekörner 3 zusammenhält. Das Matrixmaterial mag im Ausführungsbeispiel Honig enthalten. Der Basiskörper 1 ist an seiner Außenseite bereichsweise mit einer Ummantelung 4 überzogen. Gemäß einer bevorzugten Ausführungsform enthält die Ummantelung 4 zumindest einen Geschmacksstoff und/oder zumindest einen Aromastoff und/oder zumindest einen Farbstoff. Die Ummantelung erstreckt sich im Ausführungsbeispiel über etwas mehr als die Hälfte der Länge des Basiskörpers 1. Der Basiskörper 1 umgibt im Übrigen einen Trägerstab 5, der im Ausführungsbeispiel aus Kunststoff bestehen mag. Der Trägerstab 5 ragt oben aus dem Basiskörper 1 ein Stück heraus so dass sich hier ein Handhabungsabschnitt 6 ergibt, an dem der Nagerstick erfasst werden kann. Vorzugsweise und im Ausführungsbeispiel ist der ummantelte Basiskörper 1 weiterhin über seine gesamte Länge und über seinen gesamten Umfang von einer Schutzschicht 7 umgeben, die bevorzugt transparent und glänzend ausgeführt ist. Sowohl die Ummantelung 4 als auch die Schutzschicht 7 gewährleisten eine ausreichende Festigkeit und Struktur des Basiskörpers 1 bzw. des gesamten Nagersticks.

## Patentansprüche

1. Nagerstick für Tiere, insbesondere für Nagetiere, wobei ein Basiskörper (1) aus einer Matrix (2) und aus einer Vielzahl von in die Matrix (2) eingebetteten Nahrungsteilchen in Form von Cerealien bzw. Cerealienteilchen vorgesehen ist, wobei der Basiskörper (1) einen Trägerstab (5) umgibt und sich zumindest über den Großteil der Länge des Trägerstabes (5) erstreckt, wobei der Basiskörper (1) aufgrund der in die Matrix (2) eingebetteten Cerealien bzw. Cerealienteilchen eine ungleichmäßige bzw. unebene Oberfläche hat, wobei der Basiskörper (1) an seiner Außenseite zumindest bereichsweise mit einer Ummantelung (4) überzogen ist, wobei die flüssige bzw. zähflüssige Ummantelungssubstanz ein Milchprodukt und/oder ein Sirup ist und wobei der ummantelte Basiskörper (1) gebacken ist.

2. Nagerstick nach Anspruch 1, wobei der Basiskörper (1) durch Tauchen eines Trägerstabes (5) in eine flüssige bzw. zähflüssige Mischung aus dem Matrixmaterial und den Nahrungsteilchen und anschließendes Trocknen hergestellt ist.

3. Nagerstick nach einem der Ansprüche 1 oder 2, wobei die Ummantelung durch Eintauchen in eine flüssige bzw. zähflüssige Ummantelungssubstanz erzeugt ist.

4. Nagerstick nach einem der Ansprüche 1 bis 3, wobei die flüssige bzw. zähflüssige Ummantelungssubstanz ein Milchprodukt und/oder ein Sirup ist.

5. Nagerstick nach einem der Ansprüche 1 bis 4, wobei auf den ummantelten Basiskörper (1) eine Schutzschicht aufgebracht ist.

6. Nagerstick nach einem der Ansprüche 1 bis 5, wobei der ummantelte Basiskörper gebacken ist.

7. Verfahren zur Herstellung eines Nagersticks für Tiere nach Anspruch 1, insbesondere für Nagetiere, wobei ein Basiskörper (1) aus einer Matrix (2) und aus einer Vielzahl von in die Matrix (2) eingebrachten Nahrungsteilchen hergestellt wird,
wobei eine Ummantelung des Basiskörpers (1) durch Eintauchen des Basiskörpers (1) in eine flüssige bzw. zähflüssige Ummantelungssubstanz erzeugt wird,
und wobei der ummantelte Basiskörper (1) gebacken wird.

## Claims

1. A rodent stick for animals, in particular for rodents, wherein a base body (1) comprising a matrix (2) and comprising a plurality of food particles in the form of cereals or cereal particles embedded in the matrix (2) is provided, wherein the base body (1) surrounds a carrier rod (5) and extends at least over the majority of the length of the carrier rod (5), wherein the base body (1) has a non-uniform or uneven surface as a result of the cereals or cereal particles embedded in the matrix (2), wherein the base body (1) is covered with a sheathing (4) on its outer side, at least in certain areas, wherein the liquid or viscous sheathing substance is a milk product and/or a syrup and wherein the ensheathed base body (1) is baked.

2. The rodent stick according to claim 1, wherein the base body (1) is produced by dipping a carrier rod (5) into a liquid or viscous mixture of matrix material and the food particles and subsequent drying.

3. The rodent stick according to any one of claims 1 or 2, wherein the sheathing is produced by dipping into a liquid or viscous sheathing substance.

4. The rodent stick according to any one of claims 1 to 3, wherein the liquid or viscous sheathing substance is a milk product and/or a syrup.

5. The rodent stick according to any one of claims 1 to 4, wherein a protective layer is applied to the ensheathed base body (1).

6. The rodent stick according to any one of claims 1 to 5, wherein the ensheathed base body is baked.

7. A method for producing a rodent stick for animals according to claim 1, in particular for rodents, wherein a base body (1) is produced from a matrix (2) and a plurality of food particles inserted into the matrix (2),
wherein the sheathing of the base body (1) is produced by dipping the base body (1) into a liquid or viscous sheathing substance,
and wherein the ensheathed base body (1) is baked.

## Revendications

1. Bâtonnet pour rongeur, pour animaux, notamment pour rongeurs, un corps de base (1) constitué d'une matrice (2) et d'une pluralité de particules alimentaires sous forme de céréales ou de particules de céréales incorporées dans la matrice étant prévu, le corps de base (1) entourant une tige support (5) et s'étendant au moins sur la majeure partie de la longueur de la tige support (5), du fait des céréales ou particules de céréales incorporées dans la matrice (2), le corps de base (1) ayant une surface irrégulière ou rugueuse, le corps de base (1) étant revêtu sur sa face extérieure au moins par endroits d'un enrobage (4), la substance liquide ou visqueuse de l'enrobage étant un produit laitier et/ou un sirop et le corps de base (1) enrobé étant cuit au four.

2. Bâtonnet pour rongeur selon la revendication 1, le corps de base (1) étant fabriqué par immersion d'une tige support (5) dans un mélange liquide ou visqueux composé de la matière de la matrice et des particules alimentaires et par séchage consécutif.

3. Bâtonnet pour rongeur selon l'une quelconque des revendications 1 ou 2, l'enrobage étant créé par immersion dans une substance d'enrobage liquide ou visqueuse.

4. Bâtonnet pour rongeur selon l'une quelconque des revendications 1 à 3, la substance d'enrobage liquide ou visqueuse étant un produit laitier et/ou un sirop.

5. Bâtonnet pour rongeur selon l'une quelconque des revendications 1 à 4, une couche protectrice étant appliquée sur le corps de base (1) enrobé.

6. Bâtonnet pour rongeur selon l'une quelconque des revendications 1 à 5, le corps de base enrobé étant cuit au four.

7. Procédé de fabrication d'un bâtonnet pour rongeur pour animaux, notamment pour rongeurs selon la revendication 1, un corps de base (1) composé d'une matrice (2) et d'une pluralité de particules alimentaire intégrées dans la matrice (2) étant fabriqué
un enrobage du corps de base (1) étant créé par immersion du corps de base (1) dans une substance d'enrobage liquide ou visqueuse,
et le corps de base (1) enrobé étant cuit au four.
